# EUROPÄISCHE PATENTSCHRIFT

(11) **EP 0 609 831 B1**
(45) Veröffentlichungstag und Bekanntmachung des Hinweises auf die Patenterteilung: **20.08.1997**
(21) Anmeldenummer: 94101466.4
(22) Anmeldetag: 01.02.1994
(51) Int. Cl.: G01S 17/88

(54) **Verfahren zur Aufnahme von Entfernungbildern**
Method for recording distance-dependent images
Procédé pour enregistrer des images en fonction de la distance

(30) Priorität: 03.02.1993 DE 4303015
(43) Veröffentlichungstag der Anmeldung: 10.08.1994
(73) Patentinhaber: Lux, Peter, Dr., D-88085 Langenargen (DE)
(72) Erfinder: Lux, Peter, Dr., D-88085 Langenargen (DE)
(74) Vertreter: Hansmann, Dierk, Dipl.-Ing.

(56) Entgegenhaltungen:
- DE-C- 4 129 912
- US-A- 3 897 150
- US-A- 4 240 745
- IBM TECHNICAL DISCLOSURE BULLETIN, Bd.16, Nr.11, 1. April 1974, NEW YORK US Seiten 3771 - 3772 PLUNKETT ET AL 'iMAGING CONTOUR PROFILER'

## Beschreibung

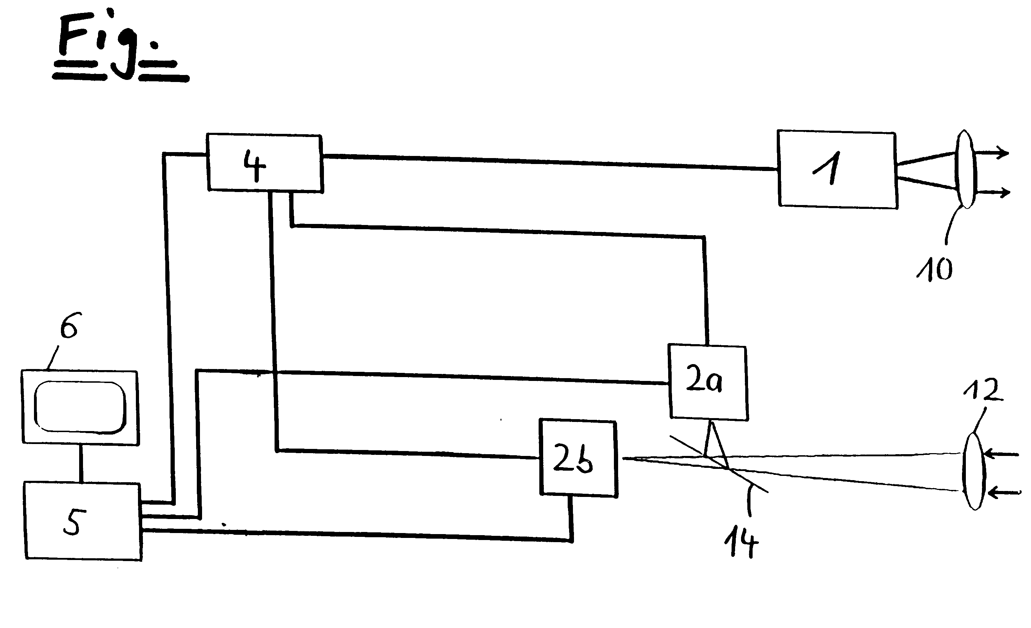

Die Erfindung betrifft ein Verfahren zur Aufnahme von Entfernungsbildern. Ein Entfernungsbild ist die Abbildung eines Objekts, deren Bildpunkte nicht wie bei einem normalen Bild den Helligkeiten oder Farben der Objektpunkte entsprechen, sondern den jeweiligen Entfernungen der entsprechenden Objektpunkte.

In der **DE 41 29 912 C1** ist ein Verfahren zur Aufnahme von Entfernungsbildern bekannt, bei der ein einzelner Lichtpuls ausgesendet wird, und der von den Objekten reflektierte Lichtpuls auf einer Bildaufnahmeeinheit mit vorgeschalteter Verschlußeinrichtung empfangen wird, wobei die Transparenz der Verschlußeinrichtung während des Empfangs einen vorbestimmten zeitlichen Verlauf besitzt. Mit Hilfe von mindestens zwei derart aufgenommener Reflexionsbilder desselben Entfernungsbereichs kann die Entfernung und die Reflektivität der Objekte ermittelt werden.

Aufgabe der Erfindung ist es, das in der **DE 41 29 912 C1** beschriebene Verfahren weiter zu verbessern, so daß das Signal/Rauschverältnis erhöht wird.

Diese Aufgabe wird mit einem Verfahren nach Patentanspruch 1 gelöst. Vorteilhafte Ausbildungen des Verfahrens sind Gegenstand weiterer Ansprüche.

In Fortentwicklung des Verfahren nach **DE 41 29 912 C1**, bei dem ein einzelner Lichtpuls ausgesendet wird, wird nun eine Phasenmethode vorgeschlagen, bei der eine kontinuierliche Beleuchtung durchgeführt wird. Dabei wird eine Lichtquelle, z.B. ein Beleuchtungslaser in einer kontinuierlichen Betriebsart mit einer hochfrequenten Ansteuerungsspannung intensitätsmoduliert (CW-Betrieb). Mit der gleichen Frequenz wird die Empfindlichkeit einer Bildaufnahmeeinheit, im folgenden auch Empfangsvorrichtung genannt, gesteuert, z.B. in dem die Verstärkung eines Bildverstärkers (channel plate) innerhalb der Bildaufnahmeeinheit entsprechend der Amplitude der Ansteuerspannung moduliert wird.

Wird mit diesem Bildverstärker ein Objekt aufgenommen, das durch einen mit gleicher Frequenz modulierten Laser beleuchtet wird, so ist die aufgenommenen Helligkeit (Grauwerte) der einzelnen Bildpunkte abhängig von der Reflektivität des Objekts und von der Phasenverschiebung zwischen der Verstärkungsfunktion des Bildverstärkers und dem reflektierten Laserlicht. Entscheidend ist, daß diese Phasenverschiebung abhängig ist von der Entfernung der abgebildeten Objekte. Man kann die Modulationsfrequenz von Laserbeleuchtungseinheit und Bildverstärker so wählen, daß in einem Entfernungsintervall, das man abbilden und vermessen will, eine Phasenverschiebung von π, resultierend aus dem doppelten Lichtweg, der vom Beginn des Entfernungsintervalls bis zum Ende zurückgelegt wird, erreicht wird. Dies bedeutet eine eindeutige Helligkeitsmodulation im Bild zwischen 0 (minimaler Entfernungswert innerhalb des zu vermessenden Entfernungsintervalls) und Maximum (maximaler Entfernungswert innerhalb des zu vermessenden Entfernungsintervalls). Entfernungsbereiche davor und dahinter erhalten entsprechend ihrer Distanz Meßwerte, die prinzipiell den Werten innerhalb des Meßintervalls gleichen, so daß Mehrdeutigkeiten entstehen. Durch Variation der Frequenzen und/oder geeignete Anpassung der Meßintervalle lassen sich solche Mehrdeutigkeiten vermeiden. Erhöht man die Meßfrequenz, so werden die Meßbereiche, die sich mit modulo π wiederholen, d.h. die Mehrdeutigkeiten häufiger, allerdings auch die Meßgenauigkeit größer, so daß hier ein Kompromiß gefunden oder auch mit Mehrfachmessungen gearbeitet werden muß.

Zur genauen Entfernungsmessung muß noch die Reflektivität des vermessenen Objekt bestimmt werden. Dies kann dadurch erreicht werden, daß ein weiteres Reflexionsbild aufgenommen wird, wobei jedoch dabei die Verstärkung des Bildverstärkers nicht moduliert wird, sondern konstant gehalten wird. Es entsteht dadurch ein durch das Laser beleuchtetes, helligkeitsmoduliertes Bild der abgebildeten Szene.
Alternativ kann bei der Aufnahme des zweiten Reflexionsbildes gegenüber der Aufnahme des ersten Reflexionsbilds auch die Phase der Modulationsfrequenz verschoben werden. In den beiden aufgenommen Bildern sind sämtliche Informationen über Entfernung und Reflektivität der Objekte enthalten. Mittels einfacher mathematischer Algorithmen können diese beiden Größen aus den Grauwerten der einzelnen Bildpunkte beider Bilder berechnet werden.

Die ermittelten Werte für Entfernung und Reflektivität der Objekte können bei Bedarf auf einem Monitor in Falschfarbkodierung ausgegeben werden.

Um die Empfindlichkeit der Empfangsvorrichtung zu steuern, kann anstatt der erwähnten steuerbaren Bildverstärkers auch eine Verschlußeinrichtung verwendet werden.

Die Aufnahme der beiden Reflexionsbilder kann sowohl zeitlich parallel (in mehreren Empfangsvorrichtungen) als auch sequentiell erfolgen.

Das erfindungsgemäße Verfahren hat gegenüber der Variante in der **DE 41 29 912 C1** den Vorteil, daß eine höhere Meßgenauigkeit erreicht werden kann (Auflösung im cm- bis mm-Bereich). Außerdem wird durch die kontinuierliche Beleuchtung das Signal/Rauschverhältnis wesentlich verbessert.

Das erfindungsgemäße Verfahren wird nun anhand einer Fig. näher erläutert. Sie zeigt das Blockschaltbild einer Vorrichtung mit zwei Empfangsvorrichtungen 2a,2b (z.B. Restlichtkameras) mit der gleichzeitig zwei Reflexionsbilder erzeugt werden. Jede Empfangsvorrichtung 2a,2b umfaßt in dieser Ausbildung einen schnellschaltbaren Bildverstärker (Channel Plates) und ein Charge Coupled Device (CCD) als Videotarget. Gesteuert von einer Modulationseinheit 4 sendet die Beleuchtungseinrichtung 1, bevorzugt ein Laser, ein (z.B. sinusförmig) moduliertes Lichtsignal aus. Das vom abzubildenden Objekt reflektierte Signal wird über einen optischen Strahlteiler 14, beispielsweise einen halbdurchlässigen Spiegel zu den Empfangsvorrichtungen 2a,2b geführt. Mindestens eine der Empfangsvorrichtungen 2a,2b wird mit dem Signal der Modulationseinheit 5 so gesteuert, daß zwischen der Modulationsfrequenz des Lasers 1 und der Modulationsfrequenz der Bildvertstärkereinheit in der betreffenden Empfangsvorrichtung (2a oder 2b) eine starre Phasenbeziehung besteht.

Wird beispielsweise der Bildverstärker in der Empfangsvorrichtung 2a moduliert, der Bildverstärker in der zweiten Empfangvorrichtung 2b jedoch nicht, so entsteht auf dem lichtempfindlichen Target in der Empfangsvorrichtung 2b ein Energiebild der beleuchteten Szene, auf dem Target der anderen Empfangsvorrichtung 2a ist dieses Energiebild durch die Variation der Phase noch entsprechend der Objektentfernung helligkeitsmoduliert. In der Verarbeitungseinheit 5 kann die Bildinformation von 2b dazu benutzt werden, um das in der Empfangsvorrichtung 2a vorhandene Bild auf die Reflektivität der Objekte zu normieren. Die restliche Helligkeitsschwankung ist dann entsprechend der Entfernungsinformation zuzurechnen und kann durch Farbwerte gekennzeichnet werden, so daß auf dem Monitor 6 ein Bild des Objekts angezeigt werden kann, dessen Reflektivität als Grauwert und dessen Entfernung als Farbwert gekennzeichnet ist (Falschfarbkodierung).

Im folgenden wird das Verfahren anhand eines konkreten Beispiels erläutert. Es soll der Meßbereich (Entfernungsbereich) zwischen 25 und 50 m vermessen werden. Beispielhaft wird eine Ansteuerfrequenz für Lasermodulation und Amplitudensteuerung des Bildverstärkers von 3 MHz gewählt. Sind Laser- und Bildverstärkeransteuerung in Phase, so hat ein nach 25 m von einem Gegenstand reflektiertes Signal entsprechend der doppelten Laufzeit von 50 m und der Wellenlänge der Modulationsfrequenz von 100 m eine Phasenverschiebung von π. Befindet sich ein Objekt in dieser Entfernung, so tritt am Bildverstärker eine Abschwächung respektive Auslöschung des reflektierten Laserlichts auf. Befindet sich jedoch ein Objekt in 50 m Entfernung, so ergibt der zurückgelegte Weg des Lichts von 100 m eine Phasenverschiebung 2 π, das Objekt wird mit maximaler Helligkeit abgebildet.

Das reflektierte Laserlicht von Objekten zwischen 25 und 50 m wird entsprechend der Entfernung zwischen dem Minimal- und Maximalwert verstärkt. Die absoluten Entfernungswerte berechnet man unter Berücksichtigung der Helligkeitswerte bei nicht moduliertem Bildverstärker.

## Patentansprüche

1. Verfahren zur Erzeugung von Entfernungsbildern nach dem Prinzip Aussenden eines Lichtsignals und zeitverzögerter Empfang des reflektierten Lichtsignals mit einer Empfangsvorrichtung (Aufnahme von Reflexionsbildern), **dadurch gekennzeichnet**, daß mindestens zwei Reflexionsbilder desselben Entfernungsbereichs aufgenommen werden, wobei das ausgesandte Lichtsignal mit einer Modulationsfrequenz intensitätsmoduliert wird und bei Aufnahme mindestens eines der beiden Reflexionsbilder die Empfindlichkeit der Empfangsvorrichtung mit derselben Modulationsfrequenz und phasenstarr dazu moduliert wird, und anschließend durch Vergleich der Helligkeitswerte im ersten und zweiten Reflexionsbild Reflektivität und Entfernung der Objekte ermittelt werden.

2. Verfahren nach Anspruch 1, dadurch gekennzeichnet, daß die ermittelten Werte für Reflektivität und Entfernung der Objekte auf einem Monitor in Falschfarbkodierung dargestellt werden.

3. Verfahren nach Anspruch 1 oder 2, dadurch gekennzeichnet bei der Aufnahme beider Reflexionsbilder die Empfindlichkeit der Empfangsvorrichtung mit der Modulationsfrequenz für das ausgesandte Lichtsignal moduliert wird, wobei der zeitliche Verlauf der Empfindlichkeit bei der Aufnahme des ersten und zweiten Reflexionsbilds phasenverschoben zueinander ist.

4. Verfahren nach Anspruch 1 oder 2, dadurch gekennzeichnet, daß bei der Aufnahme eines Reflexionsbildes die Empfindlichkeit der Empfangsvorrichtung mit der Modulationsfrequenz für das ausgesandte Lichtsignal moduliert wird, und bei der Aufnahme des zweiten Reflexionsbilds die Empfindlichkeit der Empfangsvorrichtung konstant gehalten wird.

5. Verfahren nach einem der vorangehenden Ansprüche, dadurch gekennzeichnet, daß die Aufnahme der Reflexionsbilder zeitlich parallel erfolgt.

6. Verfahren nach einem der vorangehenden Ansprüche, dadurch gekennzeichnet, daß die Aufnahme der Reflexionsbilder sequentiell erfolgt

## Claims

1. Method of producing distance pictures according to the principle of emission of a light signal and time-delayed reception of the reflected light signal by a receiving device (taking of reflected echo-return pictures), **characterized in** that at least two reflected echo-return pictures of the same distance range are taken, wherein the emitted light signal is intensity-modulated by a modulation frequency and upon taking of at least one of the two reflected echo-return pictures the sensitivity of the receiving device is modulated by the same modulation frequency and in locked phase relation thereto, and then by comparing the brightness values in the first and second reflected echo-return pictures the reflectivity and distance of the objects are determined.

2. Method according to claim 1, characterized in that the determined values for reflectivity and distance of the objects are displayed on a monitor in false colour coding.

3. Method according to claim 1 or 2, characterized in that during the taking of both reflected echo-return pictures the sensitivity of the receiving device is modulated by the modulation frequency for the emitted light signal, the characteristics as a function of time of the sensitivity during the taking of the first and second reflected echo-return pictures being phase-displaced relative to one another.

4. Method according to claim 1 or 2, characterized in that during the taking of one reflected echo-return picture the sensitivity of the receiving device is modulated by the modulation frequency for the emitted light signal, and during the taking of the second reflected echo-return picture the sensitivity of the receiving device is held constant.

5. Method according to one of the preceding claims, characterized in that taking of the reflected echo-return pictures is effected in a time-parallel manner.

6. Method according to one of the preceding claims, characterized in that taking of the reflected echo-return pictures is effected sequentially.

## Revendications

1. Procédé destiné à reproduire des images en fonction de la distance suivant le principe d'émission d'un signal lumineux et de réception retardée du signal lumineux réfléchi au moyen d'un dispositif de réception (réception d'images de réflexion), **caractérisé en ce que** au moins deux images de réflexion de la même zone d'éloignement sont réceptionnées, le signal lumineux émis étant modulé dans son intensité au moyen d'une fréquence de modulation et, lors de la réception d'au moins une des deux images de réflexion, la sensibilité du dispositif de réception étant modulée au moyen de la même fréquence de modulation et de manière rigide en phase, et la réflectivité et la distance des objets étant ensuite transmises en comparant les luminosités dans la première et la seconde images de réflexion.

2. Procédé suivant la revendication 1, caractérisé en ce que les valeurs transmises pour la réflectivité et la distance des objets sont représentées sur un moniteur en un codage en couleurs fausses.

3. Procédé suivant la revendication 1 ou 2, caractérisé en ce que lors de la réception des deux images de réflexion, la sensibilité du dispositif de réception est modulée avec la fréquence de modulation pour le signal lumineux émis, les gradients de la sensibilité lors de la réception de la première et de la seconde images de réflexion étant déphasés l'un par rapport à l'autre.

4. Procédé suivant la revendication 1 ou 2, caractérisé en ce que, lors de la réception d'une image de réflexion, la sensibilité du dispositif de réception est modulée avec la fréquence de modulation pour le signal lumineux émis, et, lors de la réception de la seconde image de réflexion, la sensibilité du dispositif de réception est maintenue à un niveau constant.

5. Procédé suivant l'une ou l'autre des revendications ci-dessus, caractérisé en ce que la réception des images de réflexion s'effectue parallèlement dans le temps.

6. Procédé suivant l'une ou l'autre des revendications ci-dessus, caractérisé en ce que la réception des images de réflexion s'effectue de manière séquentielle.
